(19) Europäisches Patentamt
European Patent Office
Office européen des brevets

(11) EP 2 725 520 A2

(12) **EUROPEAN PATENT APPLICATION**

(43) Date of publication:
**30.04.2014 Bulletin 2014/18**

(51) Int Cl.:
***G06K 9/00*** *(2006.01)* ***G06K 9/46*** *(2006.01)*

(21) Application number: **13171233.3**

(22) Date of filing: **10.06.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **13.06.2012 CN 201210194074**

(71) Applicant: **Ricoh Company, Ltd.**
**Tokyo 143-8555 (JP)**

(72) Inventor: **Xia, Bing**
**Haidian District, Beijing 100044 (CN)**

(74) Representative: **Maury, Richard Philip**
**Marks & Clerk LLP**
**90 Long Acre**
**London**
**WC2E 9RA (GB)**

(54) **Method and apparatus for detecting road**

(57) A method for detecting a road comprises: a step of obtaining a V-disparity map including the road; and a step of extracting a straight line from the V-disparity map as the road, wherein the step of extracting the straight line from the V-disparity map as the road includes a step of extracting a first straight line as a first road approximation by a Hough transform, and a step of fitting a second straight line as the road by a least squares method based on the first straight line. According to the road detecting method and apparatus, not only the defect of the Hough transform that obtains the straight line passing through the most points but probably deviates from the road area but also the defect of a common least squares method that is sensitive to noise can be overcome; therefore, the road can be detected more accurately.

FIG.2

START

S1100
OBTAINING V-DISPARITY WITH ROAD

S1200
EXTRACTING STRAIGHT LINE FROM V-DISPARITY MAP AS ROAD

END

EP 2 725 520 A2

**Description**

**BACKGROUND OF THE INVENTION**

**1. Field of the Invention**

The present invention generally relates to the image processing field, and specifically, a method and an apparatus for detecting a road.

**2. Description of the Related Art**

The driving assistance system is becoming more popular. The LDW/RDW (Lane/Road detection warning) system, a subsystem of the driving assistance system, can avoid collisions and help to determine driving directions accurately. The road detection is very important for the LDW/RDW system, because only by knowing road information can a further process such as warning be performed.

A stereo camera is widely used, because it has an advantage in that a disparity and a distance map with high precision can be obtained. One of the tasks of 3D road scene analysis is the plane detection of the road surface. However, the prior method is not applicable to a complex environment and is easily disturbed by noise.

In the non-patent document ("U-V-Disparity based Obstacle Detection with 3D Camera and Steerable Filter", Y.Gao, X.Ai, Y.Wang, J.Rarity and N.Dahnoun, 2011 IEEE Intelligent Vehicles Symposium), a method for detecting a road is disclosed. In this method, a depth map is obtained by means of a 3D camera, thereby obtaining a U-V disparity map, and features of a straight line are extracted by Hough transform so as to detect a road.

In general, the existing method for detecting a road based on a disparity map uses only a simple Hough transform and some simple position features or shape features; therefore, robustness in a complex environment is not strong.

**SUMMARY OF THE INVENTION**

The present invention is made in light of the above problems.

The present invention has an object to improve robustness of the road detection so as to be applied to the road detection in a complex environment.

According to an aspect of the present invention, a method for detecting a road comprises: a step of obtaining a V-disparity map including the road; and a step of extracting a straight line from the V-disparity map as the road, wherein the step of extracting the straight line from the V-disparity map as the road includes a step of extracting a first straight line as a first road approximation by a Hough transform; and a step of fitting a second straight line as the road by a least squares method based on the first straight line.

According to another aspect of the present invention, an apparatus for detecting a road comprises: a V-disparity map obtainment unit for obtaining a V-disparity map including the road; and a road extraction unit for extracting a straight line from the V-disparity map as the road, wherein the road extraction unit includes a first straight line extraction unit for extracting a first straight line as a first road approximation by a Hough transform; and a second straight line extraction unit for fitting a second straight line as the road by a least squares method based on the first straight line.

According to the method and the apparatus for detecting a road according to the present invention, a straight line detecting method of Hough transform and a straight line detecting method of least squares method are combined according to the characteristic of the road that is approximated to a straight line form in the V-disparity map. Accordingly, not only the defect of Hough transform that obtains the straight line passing through the most points but probably deviates from the road area can be overcome, but also the defect of a common least squares method that is sensitive to the noise can be overcome; therefore, the road can be detected more accurately.

**BRIEF DESCRIPTION OF THE DRAWINGS**

FIG. 1 is a schematic drawing illustrating an in-car system as an example of an application environment of the present invention, which may facilitate the understanding of the present invention;
FIG. 2 is an overall flowchart illustrating the method for detecting the road according to the first embodiment of the present invention;
FIG. 3 is a schematic drawing illustrating a disparity map of the road area picked up by an in-car stereo camera;
FIG. 4 is a schematic drawing illustrating a V-disparity map converted and transformed from the disparity map illustrated in FIG. 3;

FIG. 5 is a flowchart illustrating an example of the method for extracting a straight line from a V-disparity map as a road according to the embodiment of the present invention;

FIG. 6 is a schematic drawing illustrating the principle of Hough transform;

FIG. 7 is a schematic drawing illustrating the principle of fitting a straight line by least squares method;

FIG. 8 is a flowchart illustrating the first example of the method for fitting a second straight line as a road by least squares method based on a first straight line according to the first embodiment of the present invention;

FIG. 9 is a flowchart illustrating the second example of the method for fitting a second straight line as a road by least squares method based on a first straight line according to the first embodiment of the present invention;

FIG. 10 is a schematic drawing illustrating the comparison of examples of the results of the road detections in a V-disparity map;

FIG. 11 is a schematic drawing illustrating a comparison example of the result of the road detection in a disparity map;

FIG. 12 is an overall flowchart illustrating the method for detecting the road according to the second embodiment of the present invention;

FIG. 13 is a schematic drawing illustrating a morphological condition for filtration;

FIG. 14 is a schematic drawing illustrating a result example after filtering an original V-disparity map illustrated in FIG. 4 based on a morphological condition according to the embodiment of the present invention;

FIG. 15 is an overall flowchart illustrating the method for detecting the road according to the third embodiment of the present invention;

FIG. 16 is a result example obtained by retaining only a number of pixels from the bottom of columns of the V-disparity map illustrated in FIG. 14;

FIG. 17 is an overall flowchart illustrating the method for detecting the road according to the fourth embodiment of the present invention;

FIG. 18 is a block diagram illustrating a road detection apparatus according to the embodiments of the present invention; and

FIG. 19 is a conceptual diagram illustrating a hardware configuration of a road detection system according to the embodiments of the present invention.

## DETAILED DESCRIPTION OF THE PREFERRED EMBODIMENTS

In the following, embodiments of the present invention are described with reference to the accompanying drawings, so as to facilitate the understanding of the present invention.

The embodiments of the present invention will be described in the following order:

1. Summary of Invention Idea and Introduction of Essential Concepts

2. First Embodiment
3. Second Embodiment
4. Third Embodiment
5. Fourth Embodiment
6. Road Detection Apparatus
7. System Hardware Configuration
8. Summary

<1. Summary of Invention Idea and Introduction of Essential Concepts>

Before the detailed description, the idea of the present specification will be introduced generally, so as to facilitate the understanding of the present invention. A V-disparity map is applied to the road detection by persons skilled in the art. The concepts of the disparity map and the V-disparity map will be introduced as follows. The V-disparity map may be regarded as a horizontal projection, namely, a side view of the disparity map. A flat road presents the characteristic of the straight line. According to the characteristic of the straight line, as described above, a straight line is detected from a V-disparity map as a road by Hough transform. However, because of the characteristic of the road itself and the characteristic of Hough transform itself, there are some problems in applying Hough transform to the road extraction. For example, with respect to the characteristic of the road itself, in actuality, the road is not flat but an arch that is low on both sides and high in the middle; therefore, the road presents not an absolute straight line but a belt-shaped area or a long and narrow rectangular area. In this case, in contrast to a diagonal line, a straight line of the bottom, or a straight line of the top of the belt-shaped area, a straight line in the middle of the belt-shaped area represents the road better;

however, in Hough transform, a diagonal line of the belt-shaped area might be extracted as the road because only the straight line passing through the most points is considered. Another common method for extracting a straight line is least squares method, namely, a linear regression algorithm. However, because least squares method is sensitive to noise, the noises, namely points that are not on the road such as vehicles or fences might cause the estimated road to be away from the real road. However, in the present invention, a straight line is first extracted by Hough transform, and the straight line corresponds to an approximate scope of the road; and another straight line is further extracted by least squares method based on the approximate scope. Accordingly, the impact of the noise is reduced and the road is detected more accurately.

The essential concepts relating to the present specification will be introduced as follows, so as to facilitate the understanding of the present invention.

Disparity indicates an angle made by two straight lines that are drawn from opposite ends of a base line to a distant object. In general, it means a direction difference generated by looking at the same object from two points having a certain separation distance. The angle that is generated by looking at the two points from the object is called a disparity angle of the two points, and the distance between the two points is called a basic line. A distance between the object and an observer can be calculated as long as the disparity angle and length of the basic line are known.

A disparity map is an image that is based on a reference image, the size of the disparity, and the size of the reference image; and an element value of the disparity map is a disparity value. The disparity map includes distance information of a scene. The disparity map may be computed from left and right images picked up by a binocular camera or computed from a depth map of a stereogram.

The coordinates of a point of a common two dimensional disparity map are denoted by (u,v), where u is abscissa and v is ordinate; the value of the pixel at the point (u,v) is denoted by d(u,v), and represents the disparity of the point (u,v).

The V-disparity map may be regarded as a side view of the disparity map and the U-disparity map may be regarded as a top view of the disparity map, so as to facilitate the understanding. The V-disparity map may be computed from the disparity map. The grayscale of any point (d,v) of the V-disparity map is the number of the points of the corresponding disparity map where the ordinate is v and the disparity value is equal to d.

<2. First Embodiment>

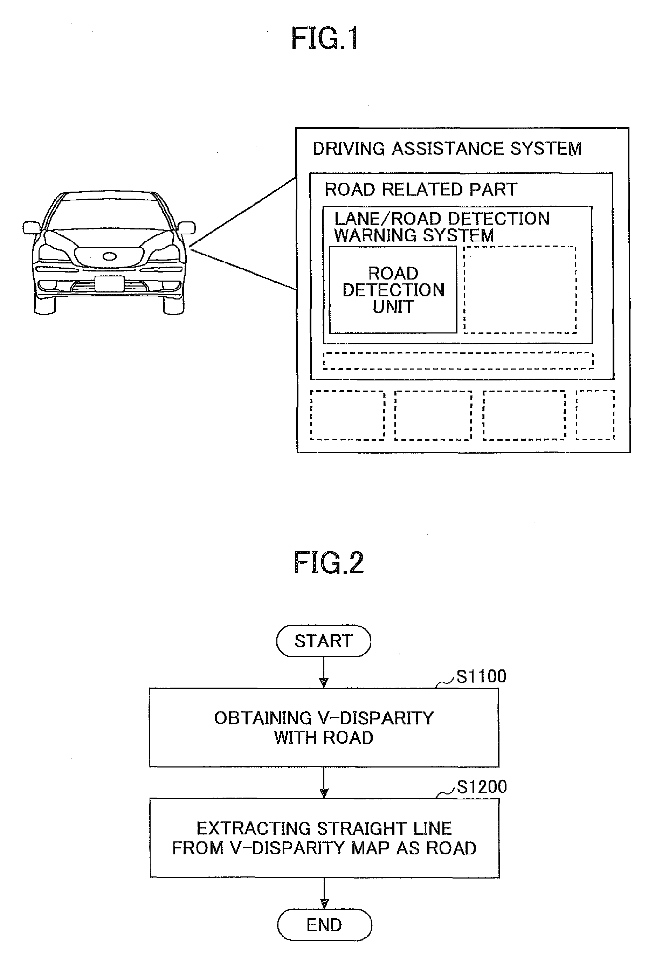

FIG. 1 is a schematic drawing illustrating an in-car system as an example of an application environment of the present invention, which may facilitate the understanding of the present invention. The software or hardware application may be implemented as the road detection unit of the system.

FIG. 2 is an overall flowchart illustrating the method for detecting the road according to the first embodiment of the present invention.

In step S1100, a V-disparity map including a road is obtained. As described above, the disparity map including a road area may be obtained by picking-up by a binocular camera, a multi-camera, or a stereo camera and computing, and the V-disparity map is obtained by converting the disparity map; or the disparity map may be obtained from a depth map that is obtained from a stereo image, and the V-disparity map is obtained by converting the disparity map.

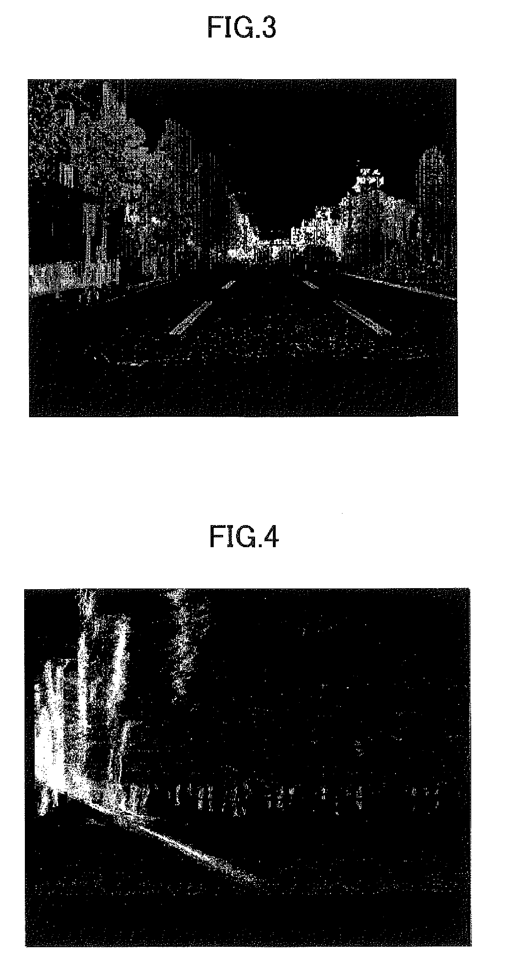

FIG. 3 is a schematic drawing illustrating a disparity map of the road area picked up an in-car stereo camera. FIG. 4 is a schematic drawing illustrating a V-disparity map converted and transformed from the disparity map illustrated in FIG. 3.

As described above, the disparity map is obtained and the V-disparity map is obtained from the disparity map. However, this is just an example, and the V-disparity map may be obtained directly by processing or computing the image obtained by a camera such as a binocular camera.

In step S1200, a straight line is extracted from the V-disparity map as the road.

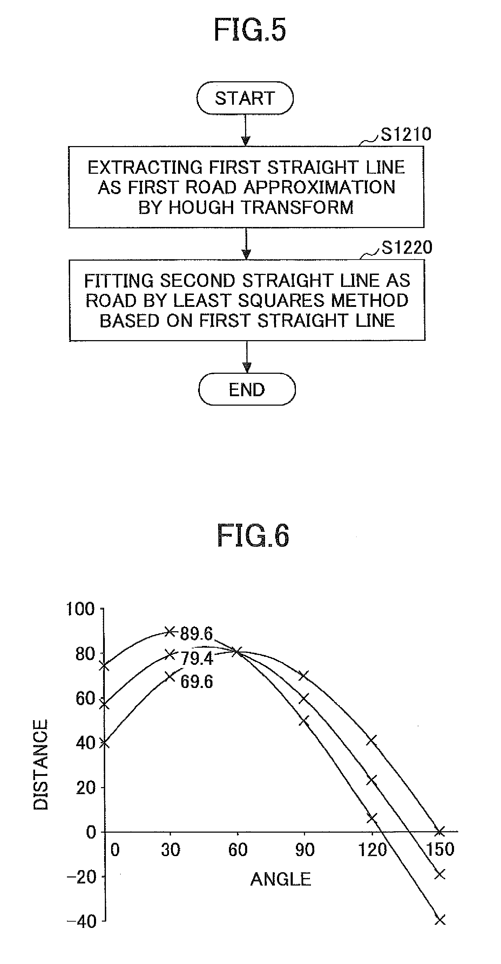

FIG. 5 is a flowchart illustrating an example of the method for extracting a straight line from a V-disparity map as a road according to the embodiment of the present invention, and the method may be applied to the step S1200 illustrated in FIG. 2.

As illustrated in FIG. 5, in step S1210, a first straight line is extracted as a first road approximation by Hough transform.

Extracting a straight line by Hough transform is well known for persons skilled in the art. In general, the principle of Hough transform is as follows. In a polar coordinate, a straight line passing through a data point may be represented by $\rho = x\cos\theta + y\sin\theta$, where $\theta$ is an angle and p is a distance. In Hough transform, it is expected to find the parameters p and $\theta$ of the straight line passing the most points. A point in the image corresponds to a curve in the parameter plane, and a straight line in the image corresponds to a point in the parameter plane. All of the points in the image are processed by Hough transform, and the straight line to be detected finally corresponds to the point the most curves intersect in the parameter plane. FIG. 6 is a schematic drawing illustrating the principle of Hough transform, and the point where the curves intersect gives angle and distance parameters of the straight line passing through the most points.

Specifically, in the embodiment of the present invention, a straight line may be found from the V-disparity map by Hough transform.

For example, the first slant line segment having the maximum disparity and the maximum V-value may be regarded as the road plane, where the maximum disparity represents the shortest distance and the maximum V-value represents the lowest height; that is to say, a straight line is found by Hough transform in the order from the close to the distant and from low to high. The reason is that it is well known for persons skilled in the art that the disparity has an inverse relationship with the distance from the camera for picking. The nearest road to the vehicle in the disparity map may be regarded as being parallel to the horizontal plane of the vehicle and it is expected to first detect the nearest road, in cases where a binocular camera is attached to the vehicle. The V-value represents the height; and unlike the common coordinate, in the V-disparity map, V coordinate axis extends downward from the origin of the coordinates, and the detection is performed in the order of the V-values from large to small, which represents the order from low to high. The reason is that in general, the road is the lowest; therefore, this detection order can ensure a rapid and accurate detection of the road, and the likelihood of detecting the top of a building as the road can be reduced.

In addition, alternatively, one of a slant line segment passing through the most points, a slant line segment having the most disparity and the longest slant line segment may also be extracted as the slant line segment, namely the road, from the lines found by means of Hough transform.

In this case, the first straight line is extracted as the first road approximation by Hough transform. However, alternatively, the first straight line may also be extracted by another method such as the method of connecting continuous points.

In step S1220, a second straight line is fit as the road by least squares method based on the first straight line.

Scope information of the road area is provided by the first straight line obtained by Hough transform or other straight line extraction methods, and the second straight line may be fit as the road by least squares method based on such information. In the following, the least squares method of the present invention is sometimes called least squares method based on Hough transform, for convenience of description.

Least squares method is the method of fitting a straight line based on the given sample points and minimizing the sum of the squares of the distances from all points to the straight line. Suppose the straight line is denoted by $y=\alpha+\beta x$, it is necessary to compute the parameters $\alpha$ and $\beta$.

Supposing the selected pixel is P1(x1,y1), P2(x2,y2)....., Pn(xn,yn), where n is an integer greater than 2, the computational formula of the parameters $\alpha$ and $\beta$ may be denoted by the following equation (1).

$$\min_{\alpha,\beta} \sum_{i=1}^{n} (yi - \alpha - \beta xi)^2 \qquad (1)$$

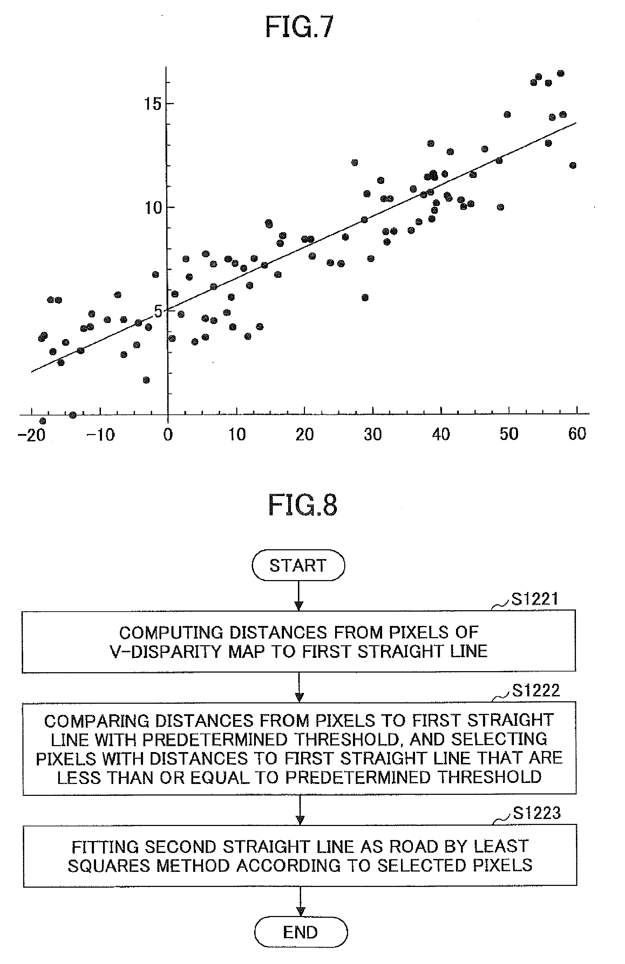

That is to say, the parameters $\alpha$ and $\beta$ that minimize the distances from all of the selected pixels to the straight line, is computed. FIG. 7 is a schematic drawing illustrating the principle of fitting a straight line by least squares method.

For example, as the first example of the method of fitting the second straight line as the road by least squares method based on the first straight line, pixels may be filtered according to the first straight line, thereby fitting a straight line by least squares method based on the filtered pixels. FIG. 8 is a flowchart illustrating the first example of the method for fitting a second straight line as a road by least squares method based on a first straight line according to the first embodiment of the present invention, and the first example of the method may be applied to step S1220 illustrated in FIG. 5.

As illustrated in FIG. 8, in step S1221, distances from pixels of the V-disparity map to the first straight line are computed. The distances may be Euclidean distances; however, the distances may be computed by another distance computing method such as norm.

In step S1222, the distances from the pixels to the first straight line are compared with a predetermined threshold, and the pixels with distances to the first straight line that are less than or equal to the predetermined threshold are selected. Here, the predetermined threshold may be determined based on experience or obtained by learning from training data.

In step S1223, the second straight line is fit as the road by least squares method according to the selected pixels.

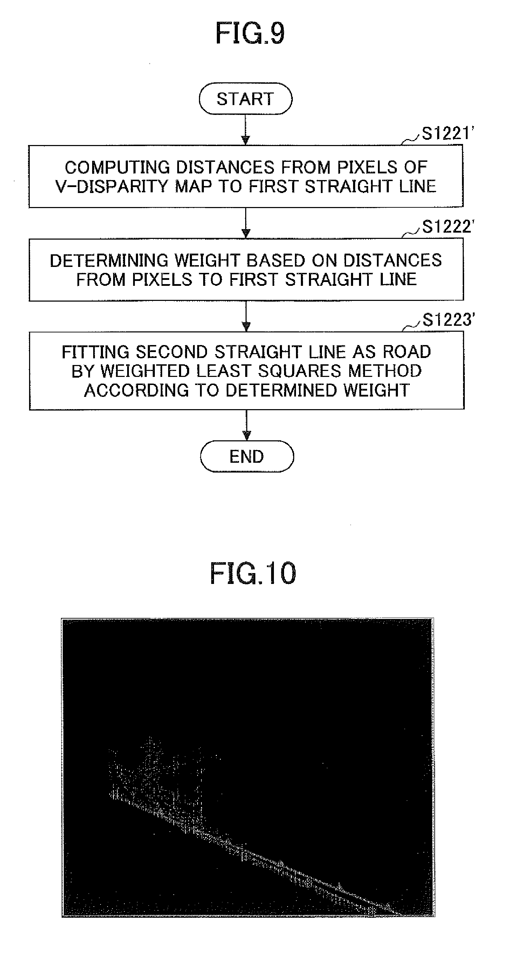

Additionally, as the second example of the method of fitting the second straight line as the road by least squares method based on the first straight line, pixels may be weighted based on the distances from the pixels to the first straight line, and a straight line is fit by weighted least squares method. The weight may be regarded as an estimation of the likelihood or confidence level that the pixels belong to the road. FIG. 9 is a flowchart illustrating the second example of the method for fitting a second straight line as a road by least squares method based on a first straight line according to the first embodiment of the present invention, and the second example of the method may be applied to step S1220 illustrated in FIG. 5.

As illustrated in FIG. 9, in step S1221', the distances from pixels of the V-disparity map to the first straight line are computed. Similarly to step S1221 of FIG. 8, the distances may be Euclidean distances; however, the distances may be computed by another distance computing method such as norm.

In step S1222', the weights are determined based on the distances from the pixels to the first straight line.

As an example of the method for determining the weights, an exponential function may be used. For example, supposing the distance from the pixel Pi(xi,yi) to the first straight line is di, the weight wi may be calculated according to the following equation (2).

$$\mathrm{wi} = e^{-\mathrm{di}} \qquad (2)$$

The weight determination method illustrated in equation (2) is just an example, and any methods for computing the weights may be used, as long as the nearer the distance to the first straight line, the higher the weight.

In step S1223 the second straight line is fit as the road by weighted least squares method according to the determined weights. When the weights are calculated according to the above equation (2), the computational formula of the parameters $\alpha$ and $\beta$ in least squares method may be denoted by the following equation (3).

$$\min_{\alpha,\beta} \sum_{i=1}^{n} \mathrm{wi} * (yi - \alpha - \beta xi)^2 \qquad (3)$$

As described above, the two examples of fitting the second straight line as the road by least squares method based on the first straight line extracted by Hough transform are described with reference to FIGs. 8 and 9. However, those two are just examples, and the present invention is not limited to those but may use other methods of fitting the second straight line as the road by least squares method based on the first straight line extracted by Hough transform. For example, the first example of the method and the second example of the method may be combined, namely, not only are the sample points filtered based on the distances but also the filtered sample points are weighted by different weights.

Additionally, the weighting methods of the sample points described in the above examples consider only the distance information from the sample points to the first straight line; however, the present invention is not limited to those, but other factors may also be considered as needed when the sample points are weighted. For example, the values of the sample points may be considered, namely, a higher weight may be assigned if the value of the sample point is greater, since the likelihood of it being noise point is lower; the position of the sample points may be considered, namely, a higher weight may be assigned if the sample point is nearer the bottom, since the likelihood of it being a road point is higher; the connection relationship between the sample point and its surrounding sample points, namely, a higher weight may be assigned if the sample point is adjacent to a diagonal line or other sample points on a direction of an approximate diagonal line, since the likelihood of it being a road point is higher; on the other hand, a lower weight may be assigned if the sample point is an isolated point, since the likelihood of it being a road point is lower.

According to the least squares method based on Hough transform of the present invention, the defect of Hough transform that obtains the straight line passing through the most points but probably deviates from the road area can be overcome, and the defect of a common least squares method that is sensitive to the noise can be overcome; therefore, the road can be detected more accurately.

FIG. 10 is a schematic drawing illustrating the comparison of examples of the results of the road detections in a V-disparity map, where the straight line with triangle marks is the first straight line extracted by Hough transform, and the straight line with circle marks is the second straight line extracted by the least squares method based on Hough transform according to the embodiment of the present invention. The first straight line is higher and corresponds to extraction of the top of the arched road; on the other hand, the straight line extracted by the least squares method based on Hough transform according to the embodiment of the present invention represents the road better.

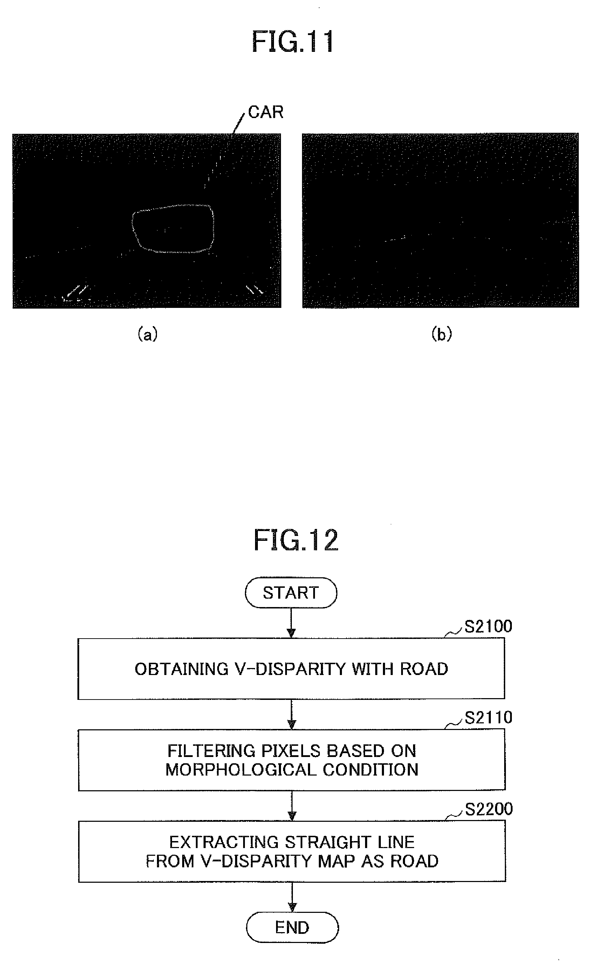

FIG. 11 is a schematic drawing illustrating a comparison example of the result of the road detection in a disparity map. FIG. 11(a) illustrates the road by Hough transform and a car illustrated by the part of the cyclic curve. FIG. 11(b) illustrates the road extracted by the least squares method based on Hough transform according to the embodiment of the present invention, and it can be understood that it does not include the car that is higher than the road.

<3. Second Embodiment>

FIG. 12 is an overall flowchart illustrating the method for detecting the road according to the second embodiment of the present invention.

The road detection method of the second embodiment illustrated in FIG. 12 is different from the road detection method illustrated in FIG. 2 in that step S2110 of filtering pixels based on a morphological condition is further performed between step S2100 of obtaining the V-disparity map and step S2200 extracting the straight line from the V-disparity map as the road. Steps S2100 and S2200 may referr to the description of the corresponding steps in FIG. 2 and their descriptions are omitted here.

In step S2110, it is determined whether pixels of the V-disparity map meet a predetermined morphological condition or not, and the pixels that meet the condition are retained and the pixels that do not meet the condition are removed.

In general, the image comes from a camera in front of the vehicle and the vehicle is on the road, so that the slope of the road in the disparity map should be within a predetermined range. Accordingly, the road points in the V-disparity map should be approximately in a slanting direction of 45 degrees, adjacent pixels exist on both upper-left and lower-right sides of a pixel, and the grayscale of the pixels should be greater than a predetermined threshold.

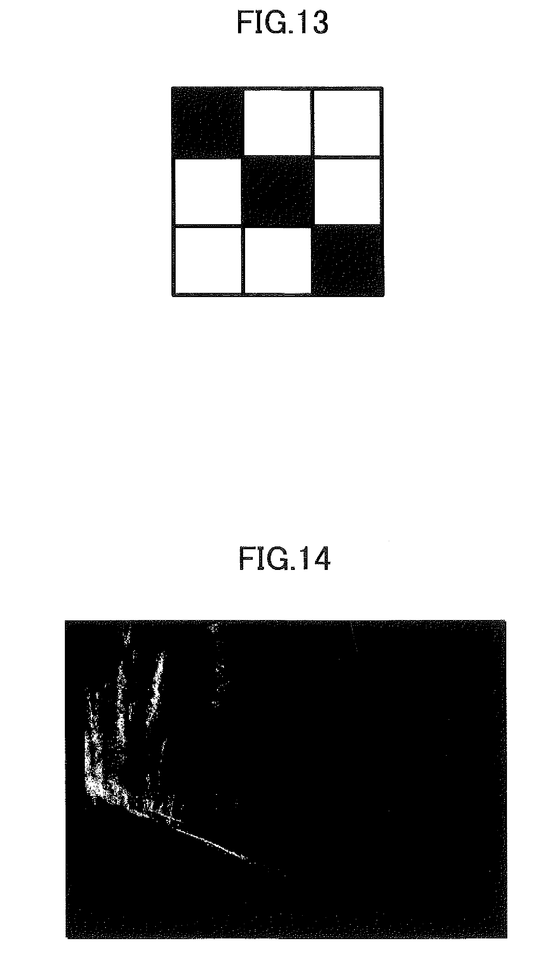

FIG. 13 is a schematic drawing illustrating a morphological condition for filtration. The black box in the middle represents a pixel for analysis, and the pixel and surrounding pixels form a 3*3 matrix. As the morphological condition, it is required that the pixels exist in the direction of the diagonal line, namely, the adjacent pixels on upper-left and lower-right sides of the pixel for analysis should have a grayscale greater than a predetermined threshold. The predetermined threshold may be set based on experience, for example, be set to 1 (it means that there is only one point having a corresponding disparity value in a column of a corresponding disparity map, and the pixel in the V-disparity map might be noise); and the predetermined threshold may be obtained by learning from a training database.

In the morphological condition illustrated in FIG. 13, only one adjacent pixel on each of upper-left and lower-right sides of the pixel for analysis is considered; namely, it is determined whether only three adjacent pixels in the direction of the diagonal line are greater than the predetermined grayscale or not. However, it is just an example, and a plurality of adjacent pixels on upper-left and lower-right sides of the pixel for analysis may be considered. For example, two adjacent pixels on upper-left side of the pixel for analysis and two adjacent pixels on lower-right side of the pixel for analysis may be considered; namely, it may be determined whether given adjacent pixels in the direction of the diagonal line are greater than the predetermined grayscale or not.

The filter based on the morphological condition in this case can be implemented easily and be very effective; therefore, the linear structure can be enhanced remarkably and the noise interference can be reduced.

FIG. 14 is a schematic drawing illustrating a result example after filtering the original V-disparity map illustrated in FIG. 4 based on a morphological condition according to the embodiment of the present invention. It can be understood that the noise is removed effectively and the linear structure is enhanced by the filtration based on the morphological condition according to the embodiment of the present invention.

From the above, according to the method and apparatus for filtering the road pixels according to the embodiment of the present invention, it is determined whether the pixels belong to the road or not based on the continuity between the pixel for analysis and the adjacent pixels in the slanting direction, according to the characteristic that the straight line slope of the road in the V-disparity map should be within a predetermined range. Therefore, a filtration process based on a morphological condition is realized, the linear structure can be enhanced and the noise interference can be reduced easily and effectively.

<4. Third Embodiment>

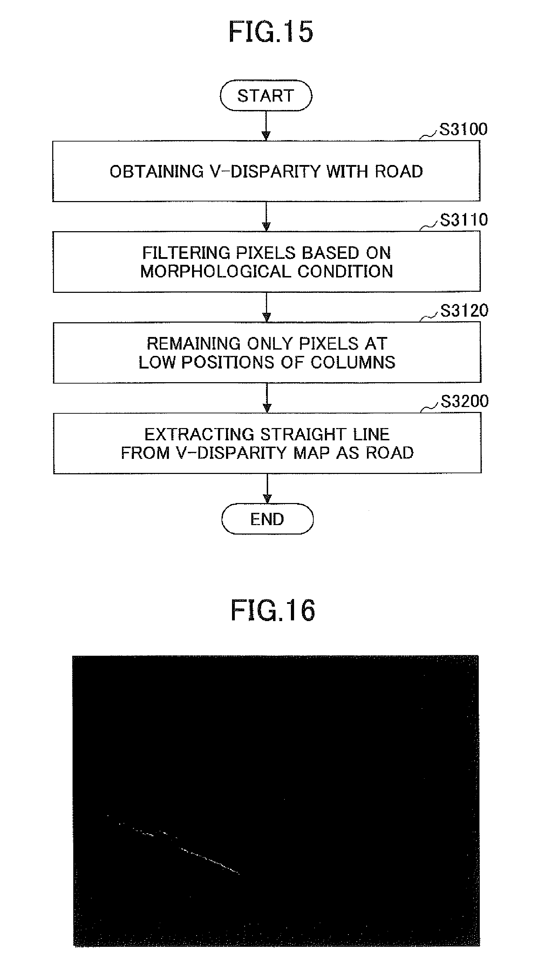

FIG. 15 is an overall flowchart illustrating the method for detecting the road according to the third embodiment of the present invention.

The road detection method of the third embodiment illustrated in FIG. 15 is different from the road detection method of the second embodiment illustrated in FIG. 12 in that step S3120 is further performed. In the following, step S3120 will be described in detail. Steps S3100, S3110 and S3200 may refer to the descriptions of the corresponding steps in FIG. 12 and their descriptions are omitted here.

As described above, the road is low, so that the road in the V-disparity map is also located at the bottom. The filtration may be performed based on this characteristic.

In step S3120, before the straight line is extracted from the V-disparity map as the road, only a predetermined number of pixels from the bottom of columns of the V-disparity map are retained. The predetermined number may be set based on experience, for example, be set to 4; the predetermined number may also be obtained by learning from a training database.

FIG. 16 is a result example obtained by retaining only a number of pixels from the bottom of columns of the V-disparity map illustrated in FIG. 14. It can be understood that the noise greater than the road such as from vehicles, buildings and pedestrians is removed effectively.

<5. Fourth Embodiment>

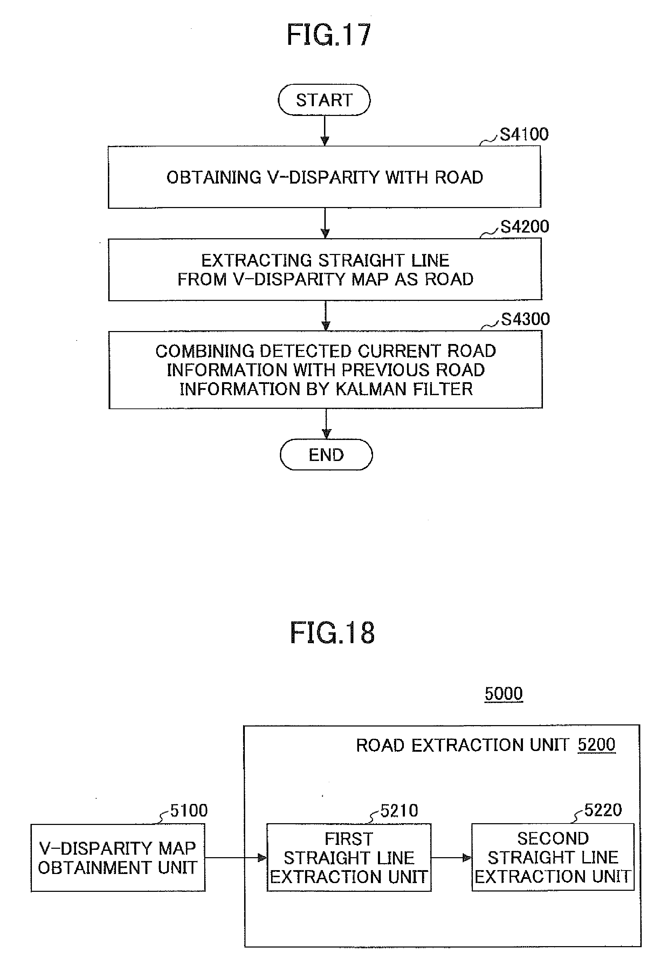

FIG. 17 is an overall flowchart illustrating the method for detecting the road according to the fourth embodiment of the present invention;

The road detection method of the fourth embodiment illustrated in FIG. 17 is different from the road detection method of the first embodiment illustrated in FIG. 2 in that step S4300 is further performed. In the following, step S4300 will be described in detail. Steps S4100 and S4200 may refer to the descriptions of the corresponding steps in FIG. 2 and their descriptions are omitted here.

In step S4300, detected current road information is combined with previous road information by a Kalman filter.

The Kalman filter is a recursive filter for a time-varying linear system introduced by Kalman. The Kalman filter merges a previous measurement estimation error into a new measurement error so as to estimate a error of the future. The Kalman filter is a recursive estimator. This means that only the estimated state from the previous time step and the current measurement are needed to compute the estimate for the current state, and no history of observations and/or estimates is required. The Kalman filter is different from most other filters in that the Kalman filter requires no designing in the frequency-domain and implementing by converting to the time-domain like a frequency filter such as a low pass filter, but is a pure time-domain filter. The detailed implementation method of the Kalman filter may be obtained from reference books so that its description is omitted here.

According to the embodiment of the present invention, in an actual driving assistance environment, the road detection is continuous in real-time and may be regarded as road position tracking. Previous road information obtained by the road detection method according to the above first, second or third embodiment (current frame detection) is combined with road information obtained by a dynamic system model of the system by the Kalman filter; therefore, a better result of the road detection than the current road information obtained by independently using the road detection method or a dynamic model estimation of the Kalman filter, can be obtained.

<6. Road Detection Apparatus>

FIG. 18 is a block diagram illustrating a road detection apparatus 5000 according to the embodiment of the present invention.

As illustrated in FIG. 18, the road detection apparatus 5000 may comprise: a V-disparity map obtainment unit 5100 for obtaining a V-disparity map including a road; and a road extraction unit 5200 for extracting a straight line from the V-disparity map as the road. The road extraction unit 5200 comprises: a first straight line extraction unit 5210 for extracting a first straight line as a first road approximation by Hough transform; and a second straight line extraction unit 5220 for fitting a second straight line as the road by least squares method based on the first straight line. The operations of the units of the road detection apparatus 5000 may refer to the description given with reference to the flowchart illustrated in FIG. 2 and are omitted here.

<7. System Hardware Configuration>

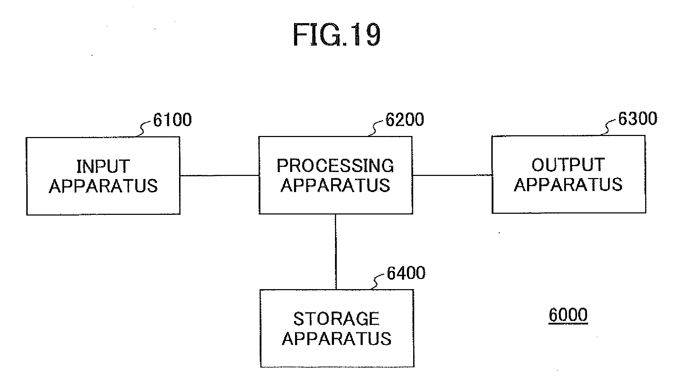

The present invention may be implemented as a system for detecting a road area and/or a road partition line. FIG. 19 is a conceptual diagram illustrating a hardware configuration of a road detection system 6000 according to the embodiments of the present invention. As illustrated in FIG. 19, the road detection system 6000 may comprise an input apparatus 6100 for inputting images for processing from the outside such as left and right images picked up by a binocular camera or a stereo video picked up by a stereo camera, for example, including a keyboard, a mouse, a communication network and a remote input device connected thereto, etc.; a processing apparatus 6200 for implementing the above road detection method and/or the road pixels filtration method according to the embodiments of the present invention, or being implemented as the above road detection apparatus according to the embodiments of the present invention, such as CPU of a computer or other chips having processing ability, etc., that can be connected to a network (not shown) such as the Internet and obtain data such as the left and right images from the network based on the requirement of processing; an output apparatus 6300 for outputting the result obtained by implementing the above road detection procedure to the outside, such as a screen, a printer, a communication network and a remote output device connected thereto, etc.; and a storage apparatus 6400 for storing an image or information of a disparity map and a V-disparity map relating to the above detection process of the road, etc., by a volatile method or a nonvolatile method, such as various kinds of volatile or nonvolatile memory including a random-access memory (RAM), a read-only memory (ROM), a hard disk and a semiconductor memory.

<8. Summary>

According to the embodiment of the present invention, a method for detecting a road may comprise: a step of obtaining a V-disparity map including the road; and a step of extracting a straight line from the V-disparity map as the road, wherein the step of extracting the straight line from the V-disparity map as the road includes a step of extracting a first straight line as a first road approximation by a Hough transform; and a step of fitting a second straight line as the road by a least squares method based on the first straight line.

The step of fitting the second straight line as the road by the least squares method based on the first straight line may comprise: a step of computing distances from pixels of the V-disparity map to the first straight line; a step of comparing the distances from the pixels to the first straight line with a predetermined threshold, and selecting the pixels with distances to the first straight line that are less than or equal to the predetermined threshold; and a step of fitting the second straight line as the road by the least squares method according to the selected pixels.

Alternatively, the step of fitting the second straight line as the road by the least squares method based on the first straight line may comprise: a step of computing distances from pixels of the V-disparity map to the first straight line; a step of determining weights based on the distances from the pixels to the first straight line; and a step of fitting the second straight line as the road by a weighted least squares method according to the determined weights.

The method for detecting a road may further comprise: a step of determining whether the pixels of the V-disparity map meet a predetermined morphological condition or not before the straight line is extracted from the V-disparity map as the road, and retaining the pixels that meet the condition and removing the pixels that do not meet the condition.

The morphological condition may be that all pixels on a diagonal line of a square area having a predetermined size and centered on the determined pixel have a grayscale greater than a predetermined threshold.

The method for detecting a road may further comprise: a step of retaining only a predetermined number of the pixels from the bottom of columns of the V-disparity map, before the straight line is extracted from the V-disparity map as the road.

The method for detecting a road may further comprise: a step of combining detected current road information with previous road information by a Kalman filter so as to update the detected current road information.

According to the embodiment of the present invention, a method for filtering road pixels is further provided. The method for filtering road pixels may comprise: a step of obtaining a V-disparity map including a road; and a step of determining whether pixels of the V-disparity map meet a predetermined morphological condition or not, and retaining the pixels that meet the condition and removing the pixels that do not meet the condition, wherein the morphological condition is that all pixels on a diagonal line of a square area having a predetermined size and centered on the determined pixel have a grayscale greater than a predetermined threshold.

According to the embodiment of the present invention, an apparatus for detecting a road is further provided. The apparatus for detecting a road may comprise: a V-disparity map obtainment unit for obtaining a V-disparity map including the road; and a road extraction unit for extracting a straight line from the V-disparity map as the road, wherein the road extraction unit includes a first straight line extraction unit for extracting a first straight line as a first road approximation by a Hough transform; and a second straight line extraction unit for fitting a second straight line as the road by a least squares method based on the first straight line.

The second straight line extraction unit fitting the second straight line as the road by the least squares method based on the first straight line may comprise: the second straight line extraction unit computing distances from pixels of the V-disparity map to the first straight line; the second straight line extraction unit determining weights based on the distances from the pixels to the first straight line; and the second straight line extraction unit fitting the second straight line as the road by a weighted least squares method according to the determined weights.

According to the method and the apparatus for detecting a road according to the present invention, not only the defect of Hough transform that obtains the straight line passing through the most points but probably deviates from the road area can be overcome, but also the defect of a common least squares method that is sensitive to the noise can be overcome at least to some extent; therefore, the road can be detected more accurately.

The above descriptions of the embodiments are just examples, and various modifications, replacements or combinations may be made without departing from the scope of the present invention by persons skilled in the art.

For example, as described above, the V-disparity map is obtained by computing from the disparity map. However, it is apparent that the V-disparity map may be obtained by computing from left and right images picked up by a special camera such as a binocular camera, a multi camera or a stereo camera directly, or by computing from a depth map of a stereogram directly.

Furthermore, in the above embodiment, the vehicle moves forward and the front view of the vehicle is picked up by a binocular camera. However, the present invention may also be applied in reverse, namely, the rear view of the vehicle is picked up by a binocular camera and the road behind the vehicle is detected.

The basic principle of the present invention is described above with reference to the embodiments. Any one or all of the steps or units of the method or apparatus according to the present invention may be implemented by hardware, software or their combination in any one of computing devices (including a processor, a storage medium, etc.) or a network of computing devices, and it can be implemented by persons skilled in the art who have read the specification of the present application.

Therefore, the present invention may also be realized by a program or a set of programs running on any one of computing devices. The computing devices may be well known general-purpose devices. Therefore, the present invention may also be implemented by providing a program product including program codes for implementing the method or apparatus. That is to say, the program product also belongs to the present invention, and a storage medium storing the program product also belongs to the present invention. Obviously, the storage medium may be any one of well known storage media or storage media which are to be developed.

In addition, in the apparatus or method of the present invention, units or steps may be divided and/or recombined. The division and/or recombination should be regarded as an equivalent embodiment of the present invention. Steps of the above method may be performed in time order, however the performing sequence is not limited to the time order. Any steps may be performed in parallel or independently. For example, in the method for detecting the road described in FIG. 15, the process of filtering pixels based on the morphological condition (step S3110) is performed before the process of retaining only a predetermined number of pixels from the bottom of columns (step S3120) is performed; however, step S3120 may be performed before step S3110.

The present invention is not limited to the specifically disclosed embodiments, and various modifications and replacements may be made without departing from the scope of the present invention.

The present application is based on and claims the benefit of priority of Chinese Priority Application No. 201210194074.4 filed on June 13, 2012, the entire contents of which are hereby incorporated by reference.

## Claims

1. A method for detecting a road, comprising:

    a step of obtaining a V-disparity map including the road; and
    a step of extracting a straight line from the V-disparity map as the road,
    wherein the step of extracting the straight line from the V-disparity map as the road includes

    a step of extracting a first straight line as a first road approximation by a Hough transform; and
    a step of fitting a second straight line as the road by a least squares method based on the first straight line.

2. The method for detecting a road according to claim 1, wherein the step of fitting the second straight line as the road by the least squares method based on the first straight line comprises:

    a step of computing distances from pixels of the V-disparity map to the first straight line;
    a step of comparing the distances from the pixels to the first straight line with a predetermined threshold, and selecting the pixels with distances to the first straight line that are less than or equal to the predetermined threshold; and
    a step of fitting the second straight line as the road by the least squares method according to the selected pixels.

3. The method for detecting a road according to claim 1, wherein the step of fitting the second straight line as the road by the least squares method based on the first straight line comprises:

    a step of computing distances from pixels of the V-disparity map to the first straight line;
    a step of determining weights based on the distances from the pixels to the first straight line; and
    a step of fitting the second straight line as the road by a weighted least squares method according to the determined weights.

4. The method for detecting a road according to any one of claims 1 to 3, further comprising:

    a step of determining whether the pixels of the V-disparity map meet a predetermined morphological condition or not before the straight line is extracted from the V-disparity map as the road, and retaining the pixels that meet the condition and removing the pixels that do not meet the condition.

5. The method for detecting a road according to claim 4, wherein the morphological condition is that all pixels on a diagonal line of a square area having a predetermined size and centered on the determined pixel have a grayscale greater than a predetermined threshold.

6. The method for detecting a road according to any one of claims 1 to 3, further comprising:

    a step of retaining only a predetermined number of the pixels from the bottom of columns of the V-disparity map, before the straight line is extracted from the V-disparity map as the road.

7.  The method for detecting a road according to any one of claims 1 to 3, further comprising:

    a step of combining detected current road information with previous road information by a Kalman filter so as to update the detected current road information.

8.  An apparatus for detecting a road, comprising:

    a V-disparity map obtainment unit for obtaining a V-disparity map including the road; and
    a road extraction unit for extracting a straight line from the V-disparity map as the road,
    wherein the road extraction unit includes

        a first straight line extraction unit for extracting a first straight line as a first road approximation by a Hough transform; and
        a second straight line extraction unit for fitting a second straight line as the road by a least squares method based on the first straight line.

9.  The apparatus for detecting a road according to claim 8, wherein the second straight line extraction unit fitting the second straight line as the road by the least squares method based on the first straight line comprises:

    the second straight line extraction unit computing distances from pixels of the V-disparity map to the first straight line;
    the second straight line extraction unit determining weights based on the distances from the pixels to the first straight line; and
    the second straight line extraction unit fitting the second straight line as the road by a weighted least squares method according to the determined weights.

# FIG.1

DRIVING ASSISTANCE SYSTEM

ROAD RELATED PART

LANE/ROAD DETECTION WARNING SYSTEM

ROAD DETECTION UNIT

# FIG.2

START

S1100

OBTAINING V-DISPARITY WITH ROAD

S1200

EXTRACTING STRAIGHT LINE FROM V-DISPARITY MAP AS ROAD

END

# FIG.3

# FIG.4

# FIG.5

```
        ( START )
            │
            ▼                          S1210
┌───────────────────────────────┐
│   EXTRACTING FIRST STRAIGHT LINE │
│     AS FIRST ROAD APPROXIMATION  │
│        BY HOUGH TRANSFORM        │
└───────────────────────────────┘
            │
            ▼                          S1220
┌───────────────────────────────┐
│  FITTING SECOND STRAIGHT LINE AS │
│   ROAD BY LEAST SQUARES METHOD   │
│    BASED ON FIRST STRAIGHT LINE  │
└───────────────────────────────┘
            │
            ▼
         ( END )
```

# FIG.6

# FIG.7

# FIG.8

```
        START
          │
          ▼                                    S1221
┌─────────────────────────────────────────────────┐
│     COMPUTING DISTANCES FROM PIXELS OF           │
│   V-DISPARITY MAP TO FIRST STRAIGHT LINE         │
└─────────────────────────────────────────────────┘
          │
          ▼                                    S1222
┌─────────────────────────────────────────────────┐
│ COMPARING DISTANCES FROM PIXELS TO FIRST STRAIGHT│
│ LINE WITH PREDETERMINED THRESHOLD, AND SELECTING │
│ PIXELS WITH DISTANCES TO FIRST STRAIGHT LINE THAT│
│    ARE LESS THAN OR EQUAL TO PREDETERMINED       │
│               THRESHOLD                          │
└─────────────────────────────────────────────────┘
          │
          ▼                                    S1223
┌─────────────────────────────────────────────────┐
│   FITTING SECOND STRAIGHT LINE AS ROAD BY LEAST  │
│  SQUARES METHOD ACCORDING TO SELECTED PIXELS     │
└─────────────────────────────────────────────────┘
          │
          ▼
         END
```

# FIG.9

START

$\overset{\frown}{\sim}$S1221'

COMPUTING DISTANCES FROM PIXELS OF
V-DISPARITY MAP TO FIRST STRAIGHT LINE

$\overset{\frown}{\sim}$S1222'

DETERMINING WEIGHT BASED ON DISTANCES
FROM PIXELS TO FIRST STRAIGHT LINE

$\overset{\frown}{\sim}$S1223'

FITTING SECOND STRAIGHT LINE AS ROAD
BY WEIGHTED LEAST SQUARES METHOD
ACCORDING TO DETERMINED WEIGHT

END

# FIG.10

# FIG.11

CAR

(a)                    (b)

# FIG.12

START

OBTAINING V-DISPARITY WITH ROAD  ~ S2100

FILTERING PIXELS BASED ON
MORPHOLOGICAL CONDITION  ~ S2110

EXTRACTING STRAIGHT LINE
FROM V-DISPARITY MAP AS ROAD  ~ S2200

END

# FIG.13

# FIG.14

# FIG.15

```
            ( START )
               │
               ▼                          S3100
┌──────────────────────────────────────┐
│  OBTAINING V-DISPARITY WITH ROAD      │
└──────────────────────────────────────┘
               │
               ▼                          S3110
┌──────────────────────────────────────┐
│      FILTERING PIXELS BASED ON        │
│      MORPHOLOGICAL CONDITION          │
└──────────────────────────────────────┘
               │
               ▼                          S3120
┌──────────────────────────────────────┐
│       REMAINING ONLY PIXELS AT        │
│      LOW POSITIONS OF COLUMNS         │
└──────────────────────────────────────┘
               │
               ▼                          S3200
┌──────────────────────────────────────┐
│       EXTRACTING STRAIGHT LINE        │
│    FROM V-DISPARITY MAP AS ROAD       │
└──────────────────────────────────────┘
               │
               ▼
            (  END  )
```

# FIG.16

# FIG.17

START

S4100

OBTAINING V-DISPARITY WITH ROAD

S4200

EXTRACTING STRAIGHT LINE
FROM V-DISPARITY MAP AS ROAD

S4300

COMBINING DETECTED CURRENT ROAD
INFORMATION WITH PREVIOUS ROAD
INFORMATION BY KALMAN FILTER

END

# FIG.18

5000

ROAD EXTRACTION UNIT 5200

5100

V-DISPARITY MAP
OBTAINMENT UNIT

5210

FIRST
STRAIGHT LINE
EXTRACTION UNIT

5220

SECOND
STRAIGHT LINE
EXTRACTION UNIT

# FIG.19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201210194074

**Non-patent literature cited in the description**

- **Y.GAO ; X.AI ; Y.WANG ; J.RARITY ; N.DAH-NOUN.** U-V-Disparity based Obstacle Detection with 3D Camera and Steerable Filter. *IEEE Intelligent Vehicles Symposium,* 2011